# DEMANDE DE BREVET EUROPEEN

(11) **EP 2 722 570 A1**
(43) Date de publication de la demande: **23.04.2014**
(21) Numéro de dépôt: 13189021.2
(22) Date de dépôt: 17.10.2013
(51) Int. Cl.: F16K 37/00

(54) **Dispositif de détection de la position d'une vanne**

(30) Priorité: 17.10.2012 FR 1259903
(71) Demandeur: Areva NP, 92400 Courbevoie (FR)
(72) Inventeur: Reis, Jérémy, 01700 Beynost (FR)
(74) Mandataire: Blot, Philippe Robert Emile

(57) **Abrégé**

Le dispositif comprend :
- une première poulie (25) solidaire en rotation de l'arbre de transmission (9) de la vanne ;
- un premier ensemble indicateur (27);
- un premier câble (29);
- le dispositif de détection (3) étant agencé pour que la rotation de l'arbre de transmission (9) dans le sens d'un déplacement de l'organe d'étanchéité (7) de la vanne vers sa première position extrême provoque l'enroulement ou le déroulement du premier câble (29) autour de la première poulie (25) et le déplacement du premier ensemble indicateur (27) vers la configuration active.

## Description

L'invention concerne en général les vannes, notamment les dispositifs permettant de détecter la position d'une vanne manuelle.

Plus précisément, l'invention concerne selon un premier aspect un dispositif de détection d'au moins une première position extrême d'une vanne, la vanne comprenant :
- un organe de commande ;
- un organe d'étanchéité, déplaçable entre la première position extrême et une seconde position extrême ;
- un arbre de transmission, agencé pour être entraîné en rotation par l'organe de commande et pour entraîner, sous l'effet de ladite rotation, l'organe d'étanchéité entre ses première et seconde positions extrêmes.

FR 1 130 965 décrit un dispositif de détection de la position de la vanne de fermeture d'une bouteille de gaz. Le dispositif de détection comporte une surface de came, solidaire en rotation de l'arbre de transmission, une came susceptible d'être déplacée en rotation par la surface de came, un câble gainé entraîné par la came, et un tiroir à deux couleurs entraîné par le câble. Un tel dispositif de détection ne peut pas être utilisé avec une vanne dont l'arbre de transmission fait plusieurs tours quand l'organe d'étanchéité se déplace entre ses deux positions extrêmes.

Il est envisagé d'équiper les vannes manuelles des centrales nucléaires existantes de tels dispositifs de détection.

Chaque centrale nucléaire comporte un nombre important de vannes manuelles, par exemple plusieurs centaines. Ces vannes sont de différents types. Notamment le nombre de tours de l'arbre de transmission nécessaire pour faire passer l'organe d'étanchéité d'une position extrême à une autre peut varier du quart de tour à dix tours.

Dans ce contexte, l'invention vise à proposer un dispositif de détection qui puisse s'adapter à une large gamme de vannes manuelles, indépendamment de la course en rotation nécessaire pour faire passer l'organe d'étanchéité d'une position extrême à une autre.

A cette fin, l'invention porte sur un dispositif de détection comprenant :
- une première poulie solidaire en rotation de l'arbre de transmission ;
- un premier ensemble indicateur déplaçable sélectivement entre une configuration active de signalement que l'organe d'étanchéité occupe sa première position extrême et une configuration inactive ;
- un premier câble, ayant une première partie d'extrémité liée à la première poulie et susceptible de s'enrouler autour de la première poulie, et une seconde partie d'extrémité liée au premier ensemble indicateur ;
- le dispositif de détection étant agencé pour que la rotation de l'arbre de transmission dans le sens d'un déplacement de l'organe d'étanchéité vers la première position extrême provoque l'enroulement ou le déroulement du premier câble autour de la première poulie et le déplacement du premier ensemble indicateur vers la configuration active.

Un tel dispositif s'adapte facilement à la course de rotation de l'arbre de transmission nécessaire pour faire passer la vanne d'une position extrême à une autre. Cette adaptation nécessite par exemple une mise du premier câble à une longueur fonction de la course de rotation de l'arbre de transmission, et/ou un calibrage initial du dispositif de détection. Cette opération est effectuée au moment du montage initial du dispositif de détection sur la vanne. Cette opération est simple et rapide.

Par ailleurs, le dispositif de détection n'est pas intrusif, au sens où il ne nécessite pas de modification des différents organes constituant la vanne. La poulie peut être facilement montée sur l'arbre de transmission, par tous moyens adaptés. Avantageusement, la poulie est constituée de deux demi-poulies, assemblées autour de l'arbre de transmission. Ceci permet de faciliter encore le montage.

La poulie est par exemple fixée à l'arbre de transmission par bridage (entraînement positif), par des vis, etc...

Le dispositif de détection fournit une information absolue quant à la position de la vanne. Il ne nécessite pas un recalibrage périodique du dispositif de détection.

Le dispositif de détection est particulièrement adapté aux vannes manuelles, mais peut également être utilisé pour les vannes motorisées.

Le premier ensemble indicateur peut être disposé immédiatement à côté de la vanne, et être par exemple monté sur le boîtier enfermant l'arbre de transmission de la vanne. Inversement, il peut également être facilement placé à distance de la vanne, la longueur du premier câble étant adaptée en fonction de la distance séparant l'arbre de transmission du premier ensemble indicateur.

Le dispositif de détection est compatible avec l'utilisation d'un boîtier électronique transmettant sans fil l'information relative à la position de la vanne jusqu'à un local tel qu'une salle de commande ou une salle de consignation.

Le dispositif de détection est bien adapté aux contraintes nucléaires : fort taux d'humidité, de rayonnement, température élevée, nécessité que les organes du dispositif de détection soient de masses limitées, de manière à ne pas constituer de projectile en cas de séisme.

Le dispositif de détection ne gêne pas la manoeuvre de la vanne par un opérateur. La résistance à la rotation n'est que légèrement augmentée.

Le dispositif de détection est adaptable à tout type de vanne, sous réserve de comporter un arbre de transmission entraîné en rotation pour déplacer l'organe d'étanchéité entre ses deux positions extrêmes. Notamment, l'organe d'étanchéité est par exemple rotatif. Il est typiquement solidaire de l'arbre de transmission, de telle sorte que la course de rotation de l'organe d'étanchéité est toujours égale à celle de l'arbre de transmission. En variante, la vanne comporte un réducteur ou un démultiplicateur, raccordant l'arbre de transmission à l'organe d'étanchéité. Les courses de rotation respectives de l'arbre et de l'organe d'étanchéité sont alors différentes. Selon un autre exemple de réalisation, l'organe d'étanchéité se déplace en translation entre ses première et seconde positions extrêmes. La vanne comporte alors un organe convertissant le mouvement de rotation de l'arbre de transmission en un mouvement de translation de l'organe d'étanchéité. La course de rotation de l'arbre est généralement élevée dans ce cas (plusieurs tours pour déplacer l'organe d'étanchéité entre ses positions extrêmes).

La vanne est par exemple un robinet à soupape, une vanne à membrane, un robinet à tournant sphérique etc...

L'organe de commande est typiquement un volant mais pourrait être différent d'un volant. En variante, l'organe de commande est un levier, un bras, une molette, etc.

Le premier ensemble indicateur fournit, en configuration active, un ou plusieurs signaux, ce signal étant visuel, électrique, etc...

Le dispositif de détection peut également présenter une ou plusieurs des caractéristiques ci-dessous, considérées individuellement ou selon toutes les combinaisons techniquement possibles ;

Selon un mode de réalisation de l'invention, le dispositif comprend :
- une seconde poulie solidaire en rotation de l'arbre de transmission ;
- un second ensemble indicateur déplaçable sélectivement entre une configuration active de signalement que l'organe d'étanchéité occupe sa seconde position extrême et une configuration inactive ;
- un second câble, ayant une première partie d'extrémité liée à la seconde poulie et susceptible de s'enrouler autour de la seconde poulie, et une seconde partie d'extrémité liée au second ensemble indicateur ;
- la dispositif de détection étant agencé pour que la rotation de l'arbre de transmission dans le sens d'un déplacement de l'organe d'étanchéité vers la seconde position extrême provoque l'enroulement ou le déroulement du second câble autour de la seconde poulie et le déplacement du second ensemble indicateur vers la configuration active.

Ainsi, le dispositif comporte deux sous-ensembles, pratiquement identiques l'un à l'autre, et indépendants l'un de l'autre. Le premier sous-ensemble permet de détecter l'arrivée de la vanne en première position extrême, et le second sous-ensemble à la seconde position extrême. En variante, le dispositif ne comporte que le premier sous-ensemble et ne peut détecter que la première position extrême. La première position extrême est une position dans laquelle la vanne est ouverte ou une position dans laquelle la vanne est fermée.

Les première et seconde poulies sont complètement indépendantes l'une de l'autre. En variante, les première et seconde poulies sont solidaires l'une de l'autre. Par exemple, les première et seconde poulies sont formées dans une même pièce.

Une telle variante de réalisation est avantageuse, puisqu'une pièce unique doit être rapportée sur l'arbre de transmission, et non deux pièces distinctes.

Selon un mode de réalisation de l'invention, le premier ensemble indicateur comprend :
- un premier support fixe ;
- un premier support mobile, déplaçable par rapport au premier support fixe entre une position de repos et une position déportée ;
- un premier enrouleur, monté par une liaison pivot sur le premier support mobile, la seconde partie d'extrémité du premier câble étant liée au premier enrouleur et susceptible de s'enrouler autour du premier enrouleur ;
- un organe de rappel sollicitant le premier enrouleur en rotation par rapport au support mobile dans le sens d'un enroulement du premier câble autour du premier enrouleur ;
- un premier indicateur susceptible d'adopter une position active de signalement que l'organe d'étanchéité occupe sa première position extrême et une position inactive agencée pour que l'arrivée du premier support mobile en position déportée provoque le passage du premier indicateur en position active.

Avantageusement, le second ensemble indicateur est identique au premier.

Le premier support mobile est par exemple un bras. Il est typiquement monté pivotant sur le support fixe, et se déplace donc entre sa position de repos et sa position déportée par rotation par rapport au support fixe. En variante, il se déplace entre sa position de repos et sa position déportée en translation, ou selon une combinaison de translation et de rotation.

Le premier enrouleur est typiquement une poulie. L'organe de rappel peut être de tout type adapté. Par exemple, l'organe de rappel est un ressort à spirale de type hyperbolique, c'est-à-dire avec des interspires non constants.

L'organe de rappel permet de maintenir le premier câble constamment en tension.

Le premier câble est typiquement un câble gainé, du type utilisé pour les freins de bicyclette. Le premier câble est fixé à la première poulie et au premier enrouleur par de simples serre-câbles. En variante, il est fixé par d'autres moyens : vissage, soudage, etc...

La longueur du premier câble est prévue pour que le premier ensemble indicateur arrive à sa configuration active quand l'organe d'étanchéité arrive à sa première position extrême.

Plus précisément, la longueur du premier câble est choisie pour que l'enroulement autour de la première poulie provoque d'abord le déroulement du premier câble hors de l'enrouleur, puis, en fin de mouvement, le déplacement du premier support mobile par rapport au premier support fixe.

En variante, c'est le déroulement du premier câble par rapport à la première poulie qui provoque d'abord l'enroulement du premier câble autour de l'enrouleur, par exemple jusqu'à une butée, puis, en fin de mouvement, le déplacement du premier support mobile par rapport au premier support fixe

Typiquement, le premier ensemble indicateur comporte un organe de rappel supplémentaire, sollicitant le premier support mobile de sa position déportée vers sa position de repos.

Un tel ensemble indicateur est simple, et peu coûteux. Il comporte peu de pièces mécaniques, et est particulièrement robuste.

Selon un mode de réalisation de l'invention, le premier indicateur comprend une carte électronique et un capteur magnétique agencé pour détecter quand le premier support mobile arrive en position déportée, le capteur étant scruté par la carte électronique.

Le support mobile porte un aimant permanent. Le capteur est par exemple un contact sec de type Reed.

Le contact est activé magnétiquement par le premier support mobile quand celui-ci arrive en position déportée, et est non activé sinon. Il correspond à un interrupteur fermant un circuit au passage d'un aimant permanent.

La carte électronique scrute en permanence la tension aux bornes du contact et compare cette tension à un seuil. Par exemple, si la tension est supérieure au seuil, elle transmet à une salle de contrôle ou une salle de consigne un signal indiquant que l'organe d'étanchéité occupe la première position extrême. La carte électronique transmet l'information de manière filaire ou au contraire par transmission sans fil. Cette information peut être sous forme numérique ou sous forme analogique.

Le premier indicateur peut rester actif sans apport d'énergie extérieure pendant une longue durée. Le capteur magnétique ne nécessite pas une alimentation électrique permanente à partir du réseau. La carte électronique est équipée d'une pile.

Ainsi, un tel dispositif de détection consomme une très faible quantité de courant.

En variante, le premier indicateur est par exemple un capteur de fin de course détectant l'arrivée du support mobile en position déportée, ou tout autre type de capteur.

Selon un mode de réalisation de l'invention, le premier indicateur comprend un indicateur visuel, déplacé par le premier support mobile. Ceci permet de signaler localement la position de la vanne, par exemple à l'intérieur du local où est située la vanne. L'indicateur visuel est par exemple une barrette graduée liée mécaniquement au premier support mobile. La barrette est normalement escamotée dans un logement. Quand le premier indicateur est en position active, la barrette fait saillie hors de son logement.

En variante, l'indicateur visuel peut être un disque à plusieurs couleurs, ou tout autre indicateur adapté.

L'indicateur visuel peut remplacer le capteur communiquant avec la carte électronique, ou être prévu en plus de celui-ci.

Selon un autre mode de réalisation de l'invention, le premier ensemble indicateur comprend :
- un support fixe ;
- un enrouleur, monté par une liaison pivot sur le support fixe, la seconde partie d'extrémité du premier câble étant liée à l'enrouleur et susceptible de s'enrouler autour de l'enrouleur ;
- un organe de rappel sollicitant l'enrouleur en rotation par rapport au support fixe dans le sens d'un enroulement du premier câble autour de l'enrouleur ;
- un détecteur, agencé pour mesurer une course de l'enrouleur en rotation par rapport au support fixe.

Un tel ensemble indicateur est plus compact et plus simple mécaniquement que l'ensemble indicateur à support mobile décrit plus haut. Il ne nécessite pas une mise du câble à une longueur déterminée. Il suffit que le câble soit suffisamment long pour pouvoir s'enrouler à la fois autour de l'enrouleur et de la poulie, compte-tenu de la course de rotation nominale de l'arbre de transmission.

Selon un mode de réalisation de l'invention, le détecteur comprend un potentiomètre, dont une résistance électrique est proportionnelle à la course de rotation de l'enrouleur.

Le potentiomètre est intercalé dans un circuit électrique comportant un générateur de courant. La tension électrique aux bornes du potentiomètre varie donc en fonction de la course de rotation de l'enrouleur. L'arrivée de l'organe d'étanchéité dans sa première position extrême est détectée quand la tension aux bornes du potentiomètre atteint un niveau déterminé.

Par exemple, le détecteur comporte une carte électronique, dans laquelle est intégré le générateur de courant. La carte électronique scrute en permanence la tension aux bornes du potentiomètre.

Ce système est simple et compact, mais nécessite une alimentation électrique, et est donc plus énergivore que l'ensemble indicateur à support mobile décrit plus haut.

Dans ce mode de réalisation, le dispositif de détection comprend une seule poulie solidaire en rotation de l'arbre de transmission, et un seul câble lié à la poulie.

Ceci contribue à rendre le dispositif de détection plus compact. Le premier ensemble indicateur permet en effet de détecter l'arrivée de l'organe d'étanchéité à sa première position extrême et à sa seconde position extrême. Ces deux évènements correspondent à deux positions de l'enrouleur séparées par une course en rotation d'amplitude déterminée. Elles peuvent donc être détectées par le même détecteur. Quand le détecteur comprend un potentiomètre, les deux positions extrêmes de l'organe d'étanchéité correspondent à deux résistances électriques déterminées du potentiomètre, et donc à deux valeurs de tension aux bornes du potentiomètre.

La carte électronique scrute en permanence la tension aux bornes du potentiomètre et la compare à des premier et second seuils, déterminés lors d'une étape de calibrage initial. Si la tension est supérieure à un premier seuil, la carte électronique envoie à une salle de contrôle l'information selon laquelle la vanne occupe une des positions extrêmes. Si la tension est inférieure à un second seuil, la carte électronique envoie à la salle de contrôle l'information selon laquelle la vanne occupe l'autre des positions extrêmes.

Selon un mode de réalisation de l'invention, le dispositif de détection comprend un organe de transmission sans fil, prévu pour transmettre une information relative à la configuration du premier ensemble indicateur jusqu'à une salle de contrôle.

La salle de contrôle est par exemple la salle de conduite du réacteur. En variante, la salle de contrôle correspond à la salle de consignation.

Selon un second aspect, l'invention concerne une vanne manuelle, comprenant :
- un organe de commande ;
- un organe d'étanchéité déplaçable entre une première position extrême et une seconde position extrême ;
- un arbre de transmission, agencé pour être entraîné en rotation par l'organe de commande et pour entraîner, sous l'effet de ladite rotation, l'organe d'étanchéité entre ses première et seconde positions extrêmes ;
- la vanne manuelle comprenant en outre un dispositif de détection d'au moins la première position extrême de la vanne, ayant les caractéristiques ci-dessus.

Selon un troisième aspect, l'invention concerne un procédé de montage d'un dispositif de détection ayant les caractéristiques ci-dessus, le procédé comprenant les étapes suivantes :
- fixer la première poulie sur l'arbre de transmission ;
- fixer le premier ensemble indicateur à une structure fixe ;
- raccorder la première partie d'extrémité du premier câble à la première poulie et la seconde partie d'extrémité du premier câble au premier ensemble indicateur.

Ainsi, le procédé de montage est particulièrement simple.

Selon un aspect avantageux du procédé, celui-ci comprend en outre une étape de mise du premier câble à une longueur fonction d'une course de rotation de l'arbre de transmission entre les première et seconde positions extrêmes de l'organe d'étanchéité.

Ainsi, l'adaptation du dispositif de détection au type de vanne, notamment au nombre de tours de l'arbre de transmission nécessaires pour déplacer l'organe d'étanchéité entre ses deux positions extrêmes, est extrêmement simple.

D'autres caractéristiques et avantages de l'invention ressortiront de la description détaillée qui en est donnée ci-dessous, à titre indicatif et nullement limitatif, en référence aux figures annexées parmi lesquelles :
- la figure 1 est une représentation schématique, en coupe, d'une vanne manuelle d'une centrale nucléaire ;
- la figure 2 est une représentation schématique en coupe et en vue de dessus de la vanne manuelle de la figure 1, et d'un dispositif de détection conforme à un premier mode de réalisation de l'invention à deux enrouleurs ;
- la figure 3 est une vue de côté, schématique, des poulies de la figure 2 et
- la figure 4 est une vue similaire à celle de la figure 2, pour un dispositif de détection conforme à un second mode de réalisation de l'invention à enrouleur unique ;

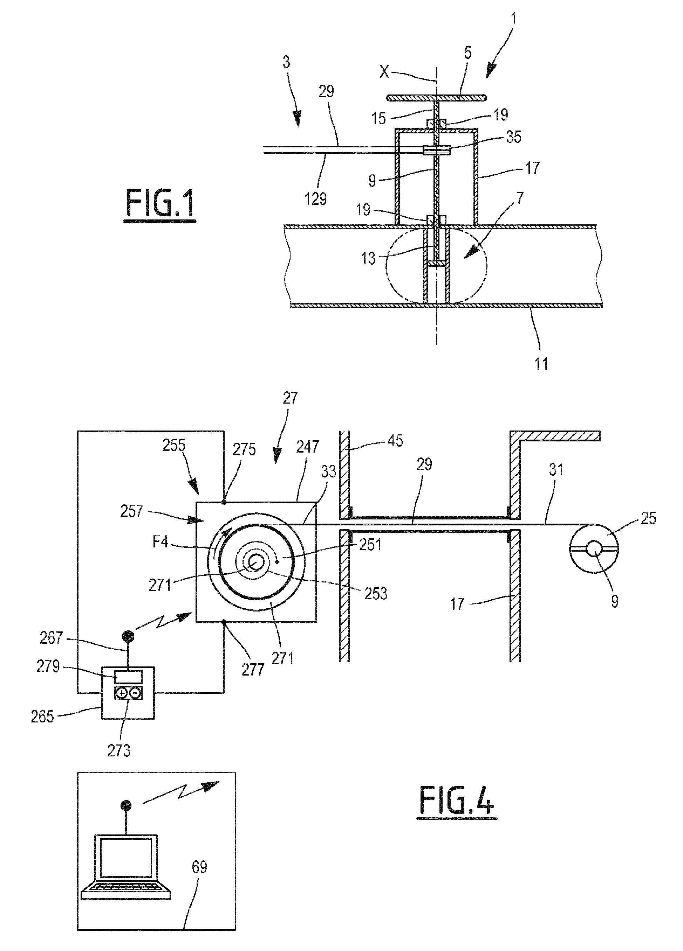

La vanne manuelle 1 représentée sur la figure 1 est équipée d'un dispositif 3 de détection des positions extrêmes de cette vanne.

Le dispositif 3 n'est représenté que partiellement sur la figure 1.

La vanne manuelle 1 comporte, de manière classique :
- un volant de commande 5 ;
- un clapet d'étanchéité 7, déplaçable entre des première et seconde positions extrêmes ;
- un arbre de transmission 9, liant en rotation le volant 5 au clapet 7.

Le clapet 7 est disposé à l'intérieur d'un conduit 11 de circulation d'un fluide. Dans sa première position, représentée en traits pleins sur la figure 1, le clapet 7 obture le conduit 11, et empêche la circulation du fluide à l'intérieur du conduit 11. Dans sa seconde position extrême, représentée en traits mixtes sur la figure 1, le clapet 7 n'obture pas le conduit 11, et autorise la circulation à l'intérieur du conduit 11.

Dans l'exemple représenté, le clapet 7 se déplace entre ses première et seconde positions extrêmes par une rotation d'environ 90° autour d'un axe X matérialisé sur la figure 1.

Dans l'exemple représenté, l'arbre de transmission est solidaire par une première extrémité 13 du clapet 7 et par une seconde extrémité 15 opposée à la première du volant 5. Il s'étend selon l'axe X.

La vanne 1 comporte encore un boîtier 17 placé autour de l'arbre de transmission 9. La première extrémité 13 de l'arbre de transmission fait saillie hors du boîtier, à l'intérieur du conduit 11. La seconde extrémité 15 de l'arbre de transmission fait saillie au-dessus du boîtier 17. L'arbre de transmission 9 est guidé en rotation par des paliers 19, solidaires du conduit 11 et du boîtier 17.

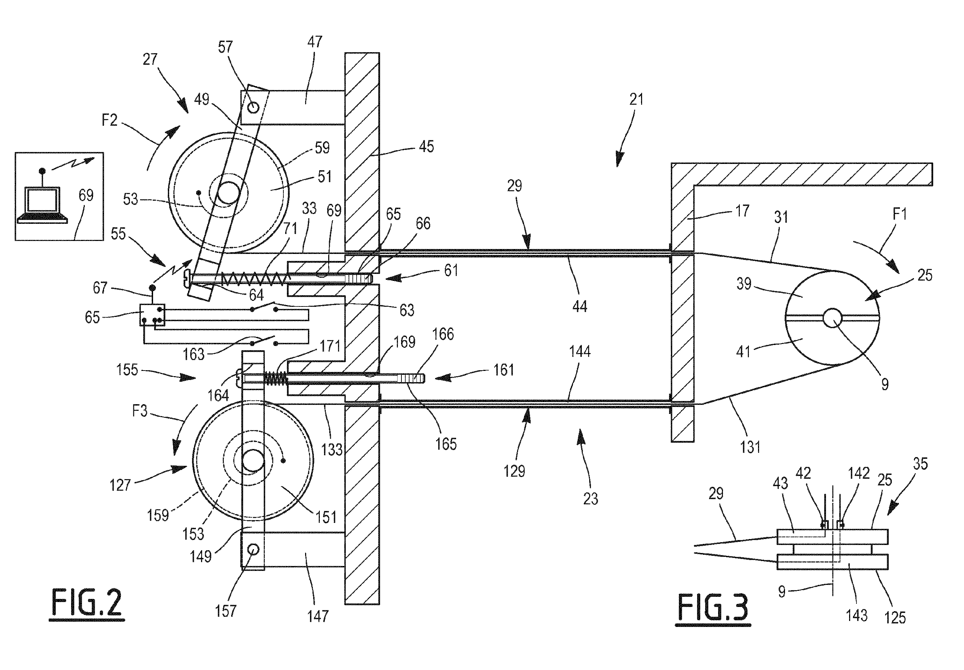

Le dispositif de détection 3 est représenté de manière détaillée sur la figure 2. Le dispositif de détection 3 comprend deux sous-ensembles 21, 23, de structure similaire, prévus l'un pour détecter que le clapet 7 se trouve dans sa première position, et l'autre que le clapet se trouve dans la seconde position.

Le sous-ensemble 21 va d'abord être décrit.

Ce sous-ensemble comprend :
- une première poulie 25 solidaire de l'arbre de transmission 9 ;
- un premier ensemble indicateur 27, déplaçable sélectivement entre une configuration active de signalement que le clapet 7 occupe sa première position, et une configuration inactive ;
- un premier câble 29, ayant une première partie d'extrémité 31 fixée à la première poulie et susceptible de s'enrouler autour de la première poulie 25, et une seconde partie d'extrémité 33 liée au premier ensemble indicateur 27.

Comme visible notamment sur la figure 3, le dispositif de détection comporte une pièce dont une partie constitue la première poulie 25, et une autre partie constitue une seconde poulie, faisant partie du second sous-ensemble 23.

La pièce 35 présente une forme générale de disque, et est constituée de deux demi-disques 39 et 41 assemblés l'un à l'autre par des moyens de fixation non représentés. Les deux demi-disques 39 et 41 prennent entre eux l'arbre d'entraînement 9. Ils sont rigidement fixés à l'arbre 9.

La première extrémité 31 est fixée à la première poulie 25 par l'intermédiaire d'un serre-câble 42. Elle est agencée pour s'enrouler dans la gorge 43 de la première poulie quand l'arbre de transmission est déplacé en rotation par rapport au boîtier 17 dans le sens horaire dans la représentation de la figure 2 (flèche F1 de la figure 2).

Le premier câble 29 est un câble fin, en acier, du type câble de guitare ou de frein de vélo. Il est gainé par une gaine 44 sur la plus grande partie de sa longueur. Les extrémités de la gaine 44 sont solidaires de structures fixes, comme par exemple le boîtier 17 de la vanne et le boîtier 45 dans lequel est logé le premier ensemble indicateur 27.

Le premier ensemble indicateur 27 comprend :
- un premier support fixe 47 ;
- un premier support mobile 49, déplaçable par rapport au premier support fixe 47 entre une position de repos et une position déportée ;
- un premier enrouleur 51, monté par une liaison pivot sur le premier support mobile 49, la seconde partie d'extrémité 33 du premier câble étant liée au premier enrouleur 51 et susceptible de s'enrouler autour du premier enrouleur 51 ;
- un organe de rappel 53 sollicitant le premier enrouleur 51 en rotation par rapport au support mobile 49 dans le sens d'un enroulement du premier câble 29 autour du premier enrouleur 51 ;
- un premier indicateur 55 susceptible d'adopter une position active de signalement que le clapet 7 occupe sa première position, et une position inactive.

Le support fixe est par exemple un élément du boîtier 45.

Le premier support mobile 49 est un bras, lié par la liaison pivot 57 au support fixe 47. Ainsi, le support mobile se déplace en rotation autour du pivot 57 entre sa position de repos et sa position déportée. L'axe du pivot 57 est parallèle à l'arbre de transmission.

Le premier enrouleur 51 est une poulie portée par le bras 49. Elle présente une gorge 59 pour l'enroulement du câble 29. L'axe de la liaison pivot liant l'enrouleur 51 au bras 49 est sensiblement parallèle à l'arbre de transmission.

L'organe de rappel 53 est un ressort en spirale de type hyperbolique, avec une interspire non constante. Ce type de ressort est utilisé notamment dans le domaine de l'horlogerie. Il sollicite l'enrouleur 51 en rotation dans le sens horaire sur la représentation de la figure 2, comme indiqué par la flèche F2 de la figure.

Dans l'exemple de réalisation de la figure 2, le premier indicateur 55 comprend un indicateur visuel 61 et un contact sec 63.

L'indicateur visuel 61 est une tige graduée, dont une extrémité est engagée dans une rainure 64 ménagée dans le bras 49. La tige peut coulisser et pivoter par rapport au bras 49. L'extrémité porte une tête élargie, permettant de retenir la tige dans la rainure. La seconde extrémité 65 de la tige, opposée au bras, porte des graduations 66.

La tige 61 est engagée dans un passage 69 ménagé dans le boîtier 45. Elle est déplaçable dans le passage 69, sous l'effet du déplacement du bras 49 entre sa position de repos et sa position déportée. Dans la position de repos du bras 49, représentée sur la figure 2, la tige 61 est entièrement escamotée à l'intérieur du passage 69 et à l'intérieur du boîtier 45. Dans la position déporté du bras 49, l'extrémité graduée 65 fait saillie hors du passage 69, à l'extérieur du boîtier 45.

Le premier indicateur 55 comporte encore une carte électronique 65 et un émetteur radio 67. Le contact sec 63 est raccordé électriquement à la carte 65. Le contact sec 63, la carte 65 et l'émetteur 67 sont typiquement intégrés dans un même boîtier.

Le bras 49 porte un aimant permanent (non représenté). Quand il arrive en position déportée, il passe devant le contact sec, ferme un champ magnétique et ferme le circuit électrique. La carte électronique transmet l'information « interrupteur ouvert/fermé » par ondes électromagnétiques (type WIFI) à la salle des consignations ou salle de commande.

Le premier ensemble indicateur 27 comprend encore un ressort 71 en spirale de rappel du bras 49 vers sa position de repos.

Le second sous-ensemble 23 va maintenant être décrit. Les éléments identiques à ceux du premier sous-ensemble, ou assurant la même fonction, seront désignés par les mêmes références plus 100.

Ce second sous-ensemble comprend :
- une seconde poulie 125 solidaire de l'arbre de transmission 9 ;
- un second ensemble indicateur 127, déplaçable sélectivement entre une configuration active de signalement que le clapet 7 occupe sa première position, et une configuration inactive ;
- un second câble 129, ayant une première partie d'extrémité 131 fixée à la seconde poulie et susceptible de s'enrouler autour de la seconde poulie 125, et une seconde partie d'extrémité 133 liée au second ensemble indicateur 127.

Comme visible sur la figure 3, la seconde poulie 125 est constituée par la même pièce 35 que la première poulie 25.

La première extrémité 131 est fixée à la seconde poulie 125 par l'intermédiaire d'un serre-câble 142. Elle est agencée pour s'enrouler dans la gorge 143 de la seconde poulie quand l'arbre de transmission est déplacé en rotation par rapport au boîtier 17 dans le sens antihoraire dans la représentation de la figure 2 (inverse de la flèche F1 de la figure 2).

Le second câble 129 est un câble fin, en acier, gainé par une gaine 144 sur la plus grande partie de sa longueur.

Le second ensemble indicateur 127 comprend :
- un second support fixe 147 ;
- un second support mobile 149, déplaçable par rapport au second support fixe 147 entre une position de repos et une position déportée ;
- un second enrouleur 151, monté par une liaison pivot sur le second support mobile 149, la seconde partie d'extrémité 133 du second câble étant liée au second enrouleur 151 et susceptible de s'enrouler autour du second enrouleur 151 ;
- un organe de rappel 153 sollicitant le second enrouleur 151 en rotation par rapport au support mobile 149 dans le sens d'un enroulement du second câble 129 autour du second enrouleur 151 ;
- un second indicateur 155 susceptible d'adopter une position active de signalement que le clapet 7 occupe sa seconde position, et une position inactive.

Le support fixe est par exemple un élément du boîtier 45.

Le second support mobile 149 est un bras, lié par la liaison pivot 157 au support fixe 147. L'axe du pivot 157 est parallèle à l'arbre de transmission.

Le second enrouleur 151 est une poulie portée par le bras 149. Elle présente une gorge 159 pour l'enroulement du câble 129.

L'organe de rappel 153 est un ressort en spirale de type hyperbolique, avec une interspire non constante. Il sollicite l'enrouleur 151 en rotation dans le sens antihoraire sur la représentation de la figure 2, comme indiqué par la flèche F3 de la figure 2.

Dans l'exemple de réalisation de la figure 2, le second indicateur 155 comprend un indicateur visuel 161 et un contact sec 163.

L'indicateur visuel 161 est une tige graduée, dont une extrémité est engagée dans une rainure 164 ménagée dans le bras 149. La tige peut coulisser et pivoter par rapport au bras 149. L'extrémité porte une tête élargie, permettant de retenir la tige dans la rainure. La seconde extrémité 165 de la tige, opposée au bras, porte des graduations 166.

La tige 161 est engagée dans un passage 169 ménagé dans le boîtier 45. Elle est déplaçable dans le passage 169, sous l'effet du déplacement du bras 149 entre sa position de repos et sa position déportée. Dans la position de repos du bras 149, la tige 161 est entièrement escamotée à l'intérieur du passage 169 et à l'intérieur du boîtier 45. Dans la position déporté du bras 149 (représentée sur la figure 2), l'extrémité graduée 165 fait saillie hors du passage 169, à l'extérieur du boîtier 45.

La carte électronique 65 et l'émetteur radio 67 sont communs aux premier et second indicateurs 55 et 155. Le contact sec 163 est raccordé électriquement à la carte 65. Il fonctionne comme le premier contact 63.

Le second ensemble indicateur 127 comprend encore un ressort 171 en spirale de rappel du bras 149 vers sa position de repos.

Le fonctionnement du dispositif de détection 3 va maintenant être décrit. On considère une situation initiale où le clapet est dans sa seconde position. Cette situation est représentée sur la figure 2. Le premier bras 49 est dans sa position de repos. Le premier câble 29 est partiellement enroulé autour de l'enrouleur 51. Il est peu ou pas du tout enroulé autour de la première poulie 25. La tige 61 est escamotée à l'intérieur du passage 69. Le contact sec 63 indique à la carte électronique 65 que le premier bras 49 n'est pas en position déportée.

Au contraire, le second bras 149 est en position déportée. Le second câble 129 n'est pratiquement pas enroulé autour du second enrouleur 151. En revanche, il est enroulé autour de la seconde poulie 125. L'indicateur visuel 161 fait saillie hors du logement 169. Le contact 163 indique à la carte électronique 65 que le second bras 149 est en position déportée.

Quand un opérateur veut faire passer le clapet de sa seconde position à sa première position, usuellement pour fermer une vanne, il saisit le volant 5 et déplace celui-ci en rotation dans le sens horaire de la représentation de la figure 2, c'est-à-dire suivant la flèche F1. Vis-à-vis du premier sous-ensemble 21, ceci a pour effet d'enrouler le premier câble 29 autour de la première poulie 25. Parallèlement, le premier câble 29 se déroule vis-à-vis de l'enrouleur 51. Dans un premier temps, le premier bras 49 reste dans sa position de repos, sous l'effet de la force de rappel du ressort 71. Puis, dans un deuxième temps, quand le premier câble 29 a été entièrement déroulé par rapport à l'enrouleur 51, l'enroulement du premier câble 29 autour de la première poulie 25 provoque le déplacement du premier bras 49 de sa position de repos à sa position déportée, par pivotement autour du pivot 57. Le premier bras 49 entraîne la tige 61. Quand le clapet 7 arrive dans sa première position, le bras 49 arrive simultanément à sa position déportée. La tige 61 fait saillie hors du passage 69 sur une longueur significative. L'arrivée du bras 49 dans sa position déportée fait que l'interrupteur se ferme et indique la fin de course à la carte électronique 65 signifiant l'arrivée du clapet en première position. La carte électronique 65 relaye l'information à la salle 69, via l'émetteur 67.

L'enchaînement des évènements est inverse pour le second sous-ensemble. Le déplacement en rotation en sens horaire de l'arbre de transmission provoque le déroulement du second câble 129 par rapport à la seconde poulie 125. Dans un premier temps, ceci provoque le déplacement du second bras 149 autour du second pivot 157, de la position déportée vers la position de repos. Le second indicateur visuel 161 rentre dans le passage 169. Une fois le second bras 149 en butée à sa position de repos, le déroulement du câble 129 par rapport à la poulie 125 provoque l'enroulement du second câble 129 autour du second enrouleur 151. Le départ du second bras 149 de sa position déportée provoque un changement de tension aux bornes du contact 163. La carte électronique 65 le détecte et en informe la salle 69 via l'émetteur 67.

Un second mode de réalisation de l'invention va maintenant être décrit, en référence à la figure 4. Seuls les points par lesquels ce second mode de réalisation diffère du premier seront détaillés ci-dessous. Les éléments identiques ou assurant la même fonction dans les deux modes de réalisation seront désignés par les mêmes références.

Dans le second mode de réalisation, le dispositif de détection comporte une seule poulie 25, un seul câble 29 et un seul ensemble indicateur 27. La poulie est solidaire de l'arbre de transmission 9.

Le dispositif de détection de la figure 4 diffère principalement de celui de la figure 2 par l'ensemble indicateur 27. Cet ensemble indicateur comprend :
- un support fixe 247 ;
- un enrouleur 251, monté par une liaison pivot sur le support fixe 247, la seconde partie d'extrémité 33 du câble étant liée à l'enrouleur 251 et susceptible de s'enrouler autour de l'enrouleur 251 .
- un organe de rappel 253, sollicitant l'enrouleur en rotation par rapport au support fixe 247 dans le sens d'un enroulement du câble 227 autour de l'enrouleur 251 ;
- un détecteur 255, agencé pour mesurer une course de l'enrouleur en rotation par rapport au support fixe 247.

Le câble 29 est monté de telle sorte qu'un enroulement de ce câble autour de la poulie 25 provoque un déroulement du câble, à son extrémité opposée, par rapport à l'enrouleur 251. Dans l'exemple représenté une rotation de l'arbre de transmission 9 en sens horaire sur la figure 4, et donc une rotation de la poulie 25 dans le même sens, provoque une rotation de l'enrouleur 251 dans le sens horaire (flèche F4).

Le détecteur 255 comprend un potentiomètre 257, une carte électronique 265 et un émetteur radio 267. Le potentiomètre 257 comprend une base constituant par exemple le support fixe 247, et une mollette rotative 269, solidaire de l'enrouleur 251. L'enrouleur 251 et la mollette rotative 269 se déplacent en rotation autour du même pivot 271, par rapport à la base fixe 247. Le déplacement en rotation de la mollette 269 autour du pivot 271 fait varier la résistance électrique du potentiomètre 257, de manière connue.

Ainsi, quand le clapet 7 se déplace entre ses première et seconde positions extrêmes, l'enrouleur 251 est entraîné en rotation autour du pivot 271 par l'intermédiaire du câble 29 et entraine lui-même la mollette 269. La résistance électrique du potentiomètre 257 varie alors entre des première et seconde valeurs prédéterminées. L'écart entre les première et seconde valeurs est fonction du nombre de tours effectués par l'enrouleur 251, c'est-à-dire de la course de rotation de l'enrouleur par rapport au support fixe.

La carte électronique 265 comporte un générateur électrique 273 raccordé électriquement aux deux bornes 275, 277 du potentiomètre. La tension électrique aux bornes 275, 277 varie en fonction de la résistance électrique du potentiomètre. La carte électronique 265 comprend un capteur 279 de mesure de la tension aux bornes du potentiomètre. La carte électronique 265 est programmée pour comparer la tension électrique ainsi mesurée à des premier et second seuils.

Le premier seuil correspond à la tension électrique aux bornes du potentiomètre 257 quand le clapet est dans sa première position. Dans cette position, le câble 29 est enroulé autour de la poulie 25, et déroulé par rapport à l'enrouleur 251. La course de rotation de l'enrouleur 251, et donc de la mollette 269, par rapport au support fixe 247 est donc maximum. Ceci correspond par exemple à une valeur de résistance électrique maximum du potentiomètre.

Au contraire, quand le clapet se trouve dans sa seconde position extrême, le câble 29 est déroulé au maximum par rapport à la poulie 25 et enroulé au maximum autour de l'enrouleur 251. Ceci correspond donc à la course maximum de rotation de l'enrouleur 251 et de la mollette 269 par rapport au support fixe 247, en sens inverse de la flèche F4. Ceci correspond par exemple à une valeur minimum de résistance électrique pour le potentiomètre.

Quand la carte électronique détecte que la tension électrique aux bornes du potentiomètre 257 est supérieure au premier seuil, elle transmet à la salle 69, via l'émetteur 267, que l'organe d'étanchéité est dans sa première position. Quand la carte électronique détecte que la tension électrique aux bornes du potentiomètre 257 est inférieure au second seuil, elle transmet à la salle 69, via l'émetteur 267, que l'organe d'étanchéité est dans sa seconde position.

Le fonctionnement du dispositif de détection va maintenant être détaillé.

Dans la situation initiale, la vanne se trouve dans sa première position extrême. Le câble 29 est enroulé au maximum autour de la poulie 25, et déroulé au maximum par rapport à l'enrouleur 251. La résistante électrique aux bornes du potentiomètre 257 est maximum, et la tension électrique aux bornes du potentiomètre est également maximum.

Quand un opérateur veut déplacer le clapet 7 de sa première position à sa seconde position extrême, il saisit le volant 5 et fait tourner celui-ci dans le sens antihoraire de la figure 4. Sous l'effet de la force de rappel de l'organe élastique 253, le fil 29 s'enroule autour de l'enrouleur 251. L'enrouleur 251 et la mollette 269 pivotent en sens antihoraire dans la représentation de la figure 4. Quand la vanne arrive à sa seconde position extrême, le câble 29 atteint son point d'enroulement maximum autour de l'enrouleur 251. La résistance électrique du potentiomètre 257 est alors minimum. La tension électrique aux bornes du potentiomètre 257 est inférieure au second seuil. La carte électronique 265 scrute en permanence la tension électrique aux bornes du potentiomètre. Quand elle détecte que cette tension électrique est inférieure au second seuil, elle relaye cette information à la salle 69 par l'intermédiaire de l'émetteur 267.

Quand l'opérateur veut faire passer le clapet de sa seconde position à sa première position extrême, la séquence opératoire est exactement inverse. Quand la carte électronique 265 détecte que la tension aux bornes du potentiomètre est supérieure au premier seuil, elle relaye cette information à la salle 69 via l'émetteur 267.

## Revendications

1. Dispositif de détection d'au moins une première position extrême d'une vanne (1), la vanne (1) comprenant :
- un organe de commande (5);
- un organe d'étanchéité (7), déplaçable entre la première position extrême et une seconde position extrême ;
- un arbre de transmission (9), agencé pour être entraîné en rotation par l'organe de commande (5) et pour entraîner, sous l'effet de ladite rotation, l'organe d'étanchéité (17) entre ses première et seconde positions extrêmes ;
le dispositif de détection (3) comprenant :
- une première poulie (25) solidaire en rotation de l'arbre de transmission (9);
- un premier ensemble indicateur (27) déplaçable sélectivement entre une configuration active de signalement que l'organe d'étanchéité (7) occupe sa première position extrême et une configuration inactive;
- un premier câble (29), ayant une première partie d'extrémité (31) liée à la première poulie (25) et susceptible de s'enrouler autour de la première poulie (25), et une seconde partie d'extrémité (33) liée au premier ensemble indicateur (27);
- le dispositif de détection (3) étant agencé pour que la rotation de l'arbre de transmission (9) dans le sens d'un déplacement de l'organe d'étanchéité (7) vers la première position extrême provoque l'enroulement ou le déroulement du premier câble (29) autour de la première poulie (25) et le déplacement du premier ensemble indicateur (27) vers la configuration active.

2. Dispositif selon la revendication 1, **caractérisé en ce qu'il** comprend :
- une seconde poulie (125) solidaire en rotation de l'arbre de transmission (9);
- un second ensemble indicateur (127) déplaçable sélectivement entre une configuration active de signalement que l'organe d'étanchéité (7) occupe sa seconde position extrême et une configuration inactive;
- un second câble (129), ayant une première partie d'extrémité (131) liée à la seconde poulie (129) et susceptible de s'enrouler autour de la seconde poulie (129), et une seconde partie d'extrémité (133) liée au second ensemble indicateur (127);
- le dispositif de détection (3) étant agencé pour que la rotation de l'arbre de transmission (9) dans le sens d'un déplacement de l'organe d'étanchéité (7) vers la seconde position extrême provoque l'enroulement ou le déroulement du second câble (129) autour de la seconde poulie (125) et le déplacement du second ensemble indicateur (127) vers la configuration active.

3. Dispositif de détection selon la revendication 1 ou 2, **caractérisé en ce que** le premier ensemble indicateur (27) comprend :
- un premier support fixe (47);
- un premier support mobile (49), déplaçable par rapport au premier support fixe (47) entre une position de repos et une position déportée ;
- un premier enrouleur (51), montée par une liaison pivot (57) sur le premier support mobile (49), la seconde partie d'extrémité (33) du premier câble (29) étant liée au premier enrouleur (51) et susceptible de s'enrouler autour du premier enrouleur (51);
- un organe de rappel (53) sollicitant le premier enrouleur (51) en rotation par rapport au support mobile (49) dans le sens d'un enroulement du premier câble (29) autour du premier enrouleur (51);
- un premier indicateur (55) susceptible d'adopter une position active de signalement que l'organe d'étanchéité (7) occupe sa première position extrême et une position inactive, agencé pour que l'arrivée du premier support mobile (49) en position déportée provoque le passage du premier indicateur (55) en position active.

4. Dispositif selon la revendication 3, **caractérisé en ce que** le premier indicateur (55) comprend une carte électronique (65) et un interrupteur à contact sec (63) agencé pour détecter quand le premier support (49) mobile arrive en position déportée, l'interrupteur (63) étant relié à la carte électronique (65).

5. Dispositif selon l'une quelconque des revendications 3 à 4, **caractérisé en ce que** le premier indicateur (55) comprend un indicateur visuel (61), déplacé par le premier support mobile (49).

6. Dispositif de détection selon la revendication 1 ou 2, **caractérisé en ce que** le premier ensemble indicateur comprend :
- un support fixe (247);
- un enrouleur (251), monté par une liaison pivot (271) sur le support fixe (247), la seconde partie d'extrémité (33) du premier câble (29) étant liée à l'enrouleur (251) et susceptible de s'enrouler autour du enrouleur (251);
- un organe de rappel (253) sollicitant l'enrouleur (251) en rotation par rapport au support fixe (247) dans le sens d'un enroulement du premier câble (29) autour de l'enrouleur (251);
- un détecteur (255), agencé pour mesurer une course de l'enrouleur (251) en rotation par rapport au support fixe (247).

7. Dispositif selon la revendication 6, **caractérisé en ce que** le détecteur (255) comprend un potentiomètre (257), dont une résistance électrique est proportionnelle à la course de rotation de l'enrouleur (251).

8. Dispositif selon la revendication 6 ou 7, **caractérisé en ce qu'il** comprend une seule poulie (25) solidaire en rotation de l'arbre de transmission (9), et un seul câble (29) lié à la poulie (25).

9. Dispositif selon l'une quelconque des revendications précédentes, **caractérisé en ce qu'il** comprend un organe (67, 267) de transmission sans fil, prévu pour transmettre une information relative à la configuration du premier ensemble indicateur (27) jusqu'à une salle de contrôle (69).

10. Vanne manuelle (1), comprenant :
- un organe de commande (5);
- un organe d'étanchéité (7), déplaçable entre une première position extrême et une seconde position extrême ;
- un arbre de transmission (9), agencé pour être entraîné en rotation par l'organe de commande (5) et pour entraîner, sous l'effet de ladite rotation, l'organe d'étanchéité (7) entre ses première et seconde positions extrêmes ;
la vanne manuelle (1) comprenant en outre un dispositif de détection (3) d'au moins la première position extrême de la vanne (1) selon l'une quelconque des revendications précédentes.

11. Procédé de montage d'un dispositif de détection selon l'une quelconque des revendications 1 à 9, le procédé comprenant les étapes suivantes :
- fixer la première poulie (25) sur l'arbre de transmission (9);
- fixer le premier ensemble indicateur (27) à une structure fixe ;
- raccorder la première partie d'extrémité (31) du premier câble (29) à la première poulie (25) et la seconde partie d'extrémité (33) du premier câble (29) au premier ensemble indicateur (27).

12. Procédé selon la revendication 11, **caractérisé en ce qu'il** comprend en outre une étape de mise du premier câble (29) à une longueur fonction d'une course de rotation de l'arbre de transmission (9) entre les première et seconde positions extrêmes de l'organe d'étanchéité (7).
